# EUROPEAN PATENT APPLICATION

(11) **EP 4 726 188 A2**
(43) Date of publication of application: **15.04.2026**
(21) Application number: 25208397.7
(22) Date of filing: 13.10.2025
(51) Int. Cl.: F02C 3/22, F02C 7/10, F02C 7/143, F02C 7/224

(54) **ENHANCED RECUPERATION CYCLE FOR AIRCRAFT POWERPLANT TURBINE ENGINE**

(30) Priority: 11.10.2024 US 202418913145
(71) Applicant: PRATT & WHITNEY CANADA CORP., Longueuil, Québec J4G 1A1 (CA)
(72) Inventor: STRATTON, Russell, (01BE5) Longueuil, J4G 1A1 (CA); VAN DEN ENDE, Daniel, (01BE5) Longueuil, J4G 1A1 (CA)
(74) Representative: Dehns

(57) **Abstract**

A powerplant (20) is provided for an aircraft. This aircraft powerplant (20) includes a compressor section (40), a fuel-air heat exchanger (86), a recuperator (88), a combustor section (41) comprising a combustor (68), a turbine section (42), a flowpath (50) and a fuel delivery system (28). The flowpath (50) extends from an airflow inlet (64) into the flowpath (50), through the compressor section (40), the fuel-air heat exchanger (86), the recuperator (88), the combustor section (41) and the turbine section (42), to a combustion products exhaust (66) from the flowpath (50). The fuel delivery system (28) includes a fuel source (74), a fuel circuit (76) and a fuel injector (72). The fuel circuit (76) fluidly couples the fuel source (74) to the fuel injector (72) and extends through the fuel-air heat exchanger (86). The fuel injector (72) is configured to introduce fuel into the flowpath (50) for combustion within the combustor (68).

## Description

### TECHNICAL FIELD

This disclosure relates generally to an aircraft powerplant and, more particularly, to an enhanced recuperation cycle for the aircraft powerplant.

### BACKGROUND INFORMATION

An aircraft powerplant with a gas turbine engine may include various heat exchange systems to recuperate heat energy. While these known heat exchange systems have various benefits, there is still room in the art for improvement.

### SUMMARY

According to an aspect of the present disclosure, a powerplant is provided for an aircraft. This aircraft powerplant includes a compressor section, a fuel-air heat exchanger, a recuperator, a combustor section comprising a combustor, a turbine section, a flowpath and a fuel delivery system. The flowpath extends from an airflow inlet into the flowpath, through the compressor section, the fuel-air heat exchanger, the recuperator, the combustor section and the turbine section, to a combustion products exhaust from the flowpath. The fuel delivery system includes a fuel source, a fuel circuit and a fuel injector. The fuel circuit fluidly couples the fuel source to the fuel injector and extends through the fuel-air heat exchanger. The fuel injector is configured to introduce fuel into the flowpath for combustion within the combustor.

According to another aspect of the present disclosure, another powerplant is provided for an aircraft. This aircraft powerplant includes a rotating assembly, a combustor, a fuel-air heat exchanger, a recuperator, a flowpath and a fuel delivery system. The rotating assembly includes a compressor rotor and a turbine rotor. The flowpath extends longitudinally from an airflow inlet into the flowpath, sequentially across the compressor rotor, through the fuel-air heat exchanger, through the recuperator, through the combustor and across the turbine rotor, to combustion products exhaust from the flowpath. The fuel delivery system includes a fuel source, a fuel circuit and a fuel injector. The fuel circuit is configured to deliver fuel received from the fuel source to the fuel injector. The fuel circuit extends through the fuel-air heat exchanger between the fuel source and the fuel injector. The fuel injector is configured to inject the fuel into the combustor.

According to still another aspect of the present disclosure, another powerplant is provided for an aircraft. This aircraft powerplant includes a fuel-air heat exchanger, a compressor section, a recuperator, a combustor section comprising a combustor, a turbine section, a flowpath and a fuel delivery system. The flowpath extends from an airflow inlet into the flowpath, through the fuel-air heat exchanger, the compressor section, the recuperator, the combustor section and the turbine section, to a combustion products exhaust from the flowpath. The fuel delivery system includes a fuel source, a fuel circuit and a fuel injector. The fuel circuit is configured to direct fuel received from the fuel source, across the fuel-air heat exchanger, to the fuel injector. The fuel injector is configured to inject the fuel into the combustor section for combustion within the combustor.

The following optional features may be applied to any of the above aspects.

The powerplant may also include a second compressor section. The flowpath may extend through the second compressor section upstream of the fuel-air heat exchanger.

The powerplant may also include a second compressor rotor. The flowpath may extend across the second compressor rotor downstream of the fuel-air heat exchanger.

The fuel source may be configured as or otherwise include a hydrogen reservoir. The fuel may be or otherwise include hydrogen (H₂) fuel.

The compressor section may be a downstream-most compressor section along the flowpath.

The compressor section may be a first compressor section. The powerplant may also include a second compressor section. The flowpath may extend through the second compressor section downstream of the fuel-air heat exchanger.

The fuel injector may be configured to inject the fuel into a combustion chamber within the combustor.

The fuel circuit may be configured to direct the fuel from the fuel source to the fuel injector. The fuel delivery system may be configured such that at least some of the fuel within the fuel circuit entering the fuel-air heat exchanger is in a liquid phase at a cryogenic state.

The fuel circuit may be configured to direct the fuel from the fuel source to the fuel injector. The fuel delivery system may be configured such that at least some of the fuel within the fuel circuit entering the fuel-air heat exchanger is in a gaseous phase at a cryogenic state.

The fuel source may be configured to contain a quantity of the fuel in a liquid phase.

The fuel may be hydrogen fuel.

The fuel may be a non-hydrocarbon fuel.

The fuel delivery system may also include a fuel turbine. The fuel delivery system may be configured to expand the fuel across the fuel turbine along the fuel circuit between the fuel-air heat exchanger and the fuel injector.

The fuel delivery system may also include a fuel turbine. The fuel delivery system may be configured to expand the fuel across the fuel turbine along the fuel circuit between the fuel source and the fuel-air heat exchanger.

The fuel delivery system may also include a recirculation circuit. An inlet into the recirculation circuit may be fluidly coupled to the fuel circuit downstream of the fuel-air heat exchanger along the fuel circuit. An outlet from the recirculation circuit may be fluidly coupled to the fuel circuit upstream of the fuel-air heat exchanger along the fuel circuit.

The powerplant may also include a second heat exchanger. The flowpath may extend through the second heat exchanger upstream of the fuel-air heat exchanger.

The powerplant may also include a propulsor rotor rotatably driven by a turbine rotor in the turbine section.

The powerplant may also include a generator rotor rotatably driven by a turbine rotor in the turbine section.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of a powerplant for an aircraft.
FIG. 2 is a partial schematic illustration of a fuel delivery system with an engine combustor section.
FIG. 3 is a partial schematic illustration of the aircraft powerplant with another fuel-air heat exchanger arrangement.
FIGS. 4 and 5 are partial schematic illustrations of various fuel delivery system arrangements for the aircraft powerplant of FIGS. 1 and 3.

### DETAILED DESCRIPTION

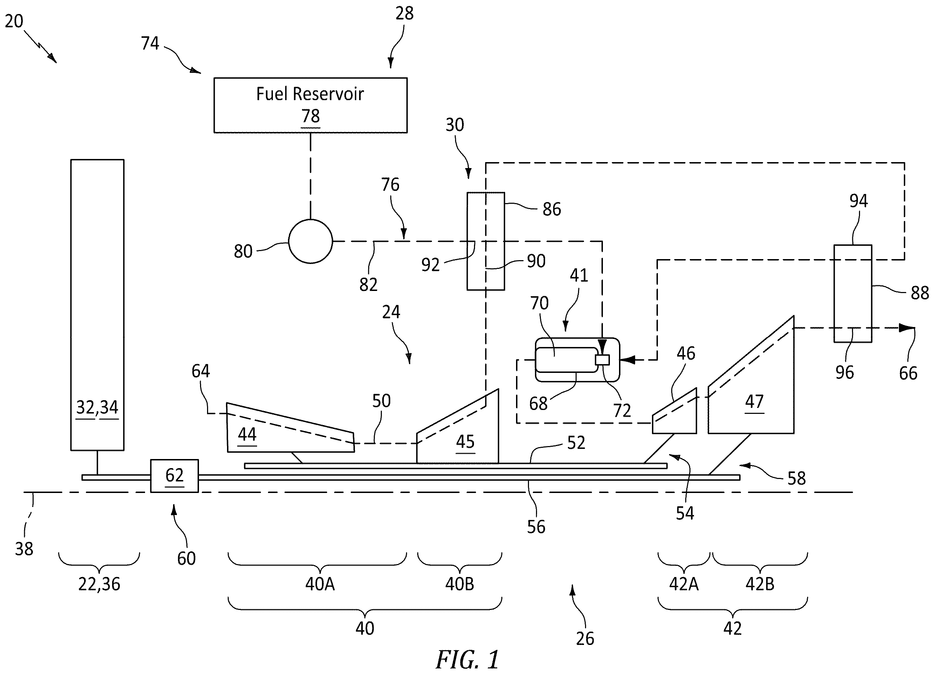

FIG. 1 illustrates a powerplant 20 for an aircraft. The aircraft may be an airplane, a rotorcraft (e.g., a helicopter), a drone (e.g., an unmanned aerial vehicle (UAV)) or any other manned or unmanned aerial vehicle or system. The aircraft powerplant 20 may be configured as, or otherwise included as part of, a propulsion system for the aircraft. The aircraft powerplant 20 may also or alternatively be configured as, or otherwise included as part of, an electrical power system for the aircraft. The aircraft powerplant 20 of FIG. 1 includes a mechanical load 22 and a core 24 of a gas turbine engine 26, where the engine core 24 (e.g., a gas generator) is configured to power operation of the mechanical load 22. The aircraft powerplant 20 of FIG. 1 also includes a fuel delivery system 28 and a heat exchange system 30.

The mechanical load 22 may be configured as or otherwise include a rotor 32 mechanically driven by the engine core 24. This driven rotor 32 may be a bladed propulsor rotor 34 for the aircraft propulsion system. The propulsor rotor 34 may be a ducted propulsor rotor, an open propulsor rotor (e.g., an un-ducted propulsor rotor) or any other type of air moving rotor. For example, where the turbine engine 26 is a turbofan engine, the ducted propulsor rotor may be a fan rotor. Where the turbine engine 26 is a turboprop engine, the open propulsor rotor may be a propeller rotor. Where the turbine engine 26 is a turboshaft engine, the open propulsor rotor may be a rotorcraft rotor such as a helicopter main rotor or a helicopter tail rotor. Alternatively, the driven rotor 32 may be configured as a generator rotor of an electric power generator for the aircraft electrical power system; e.g., an auxiliary power unit (APU) system. The present disclosure, however, is not limited to the foregoing exemplary mechanical loads nor to the foregoing exemplary turbine engines. The turbine engine 26, for example, may alternatively be configured as a turbojet engine, a propfan engine, a pusher fan engine or any other type of turbine engine operable to power the operation of the mechanical load 22. However, for ease of description, the mechanical load 22 is described below as a propulsor section 36 of the turbine engine 26, and the driven rotor 32 is described below as the propulsor rotor 34 within the propulsor section 36.

The turbine engine 26 extends axially along an axis 38 from a forward, upstream end of the turbine engine 26 to an aft, downstream end of the turbine engine 26. Briefly, this axis 38 may be a centerline axis of the turbine engine 26 and/or its members. The axis 38 may also be a rotational axis of one or more members of the turbine engine 26. The turbine engine 26 of FIG. 1 includes the propulsor section 36, a compressor section 40, a combustor section 41 and a turbine section 42. The compressor section 40 of FIG. 1 includes a low pressure compressor (LPC) section 40A and a high pressure compressor (HPC) section 40B. The turbine section 42 of FIG. 1 includes a high pressure turbine (HPT) section 42A and a low pressure turbine (LPT) section 42B.

The LPC section 40A includes a low pressure compressor (LPC) rotor 44. The HPC section 40B includes a high pressure compressor (HPC) rotor 45. The HPT section 42A includes a high pressure turbine (HPT) rotor 46. The LPT section 42B includes a low pressure turbine (LPT) rotor 47. The LPC rotor 44, the HPC rotor 45, the HPT rotor 46 and the LPT rotor 47 each include a rotor base (e.g., a disk or a hub) and a plurality of rotor blades (e.g., airfoils, rotor vanes, etc.). The rotor blades are arranged and may be equispaced circumferentially around the respective rotor base in one or more arrays. With this arrangement, the rotor blades may be arranged into one or more stages longitudinally along an (e.g., annular) internal flowpath 50 of the turbine engine 26 and its engine core 24. Each of the rotor blades is connected to the respective rotor base. Each of the rotor blades projects radially (e.g., spanwise) out from the respective rotor base into the engine flowpath 50 and to a distal tip of the respective rotor blade.

The LPC rotor 44 and the HPC rotor 45 are coupled to and rotatable with the HPT rotor 46. The LPC rotor 44 and the HPC rotor 45 of FIG. 1, for example, are connected to the HPT rotor 46 by a high speed shaft 52. At least (or only) the LPC rotor 44, the HPC rotor 45, the HPT rotor 46 and the high speed shaft 52 collectively form a high speed rotating assembly 54; e.g., a high speed spool of the engine core 24. This high speed rotating assembly 54 may be rotatable about the axis 38. Of course, in other embodiments, the LPC rotor 44 may alternatively be coupled to the LPT rotor 47 or another turbine rotor; e.g., an intermediate turbine (IT) rotor.

The LPT rotor 47 of FIG. 1 is connected to a low speed shaft 56. At least (or only) the LPT rotor 47 and the low speed shaft 56 collectively form a low speed rotating assembly 58; e.g., a low speed spool / a power turbine spool of the engine core 24. This low speed rotating assembly 58 is further coupled to the propulsor rotor 34 - the driven rotor 32 - through a drivetrain 60. This drivetrain 60 may be configured as a geared drivetrain, where a geartrain 62 (e.g., a transmission, a speed change device, an epicyclic geartrain, etc.) is disposed between and operatively couples the propulsor rotor 34 to the low speed rotating assembly 58 and its LPT rotor 47. With this arrangement, the propulsor rotor 34 may rotate at a different (e.g., slower) rotational speed than the low speed rotating assembly 58 and its LPT rotor 47. However, the drivetrain 60 may alternatively be configured as a direct drive drivetrain, where the geartrain 62 is omitted. With such an arrangement, the propulsor rotor 34 rotates at a common (the same) rotational speed as the low speed rotating assembly 58 and its LPT rotor 47. This low speed rotating assembly 58 and/or the propulsor rotor 34 may be rotatable about the axis 38. Alternatively, the propulsor rotor 34 may be offset from the engine core 24 such that the propulsor rotor 34 rotates about an axis which is (e.g., laterally and/or axially) offset from the axis 38.

The engine flowpath 50 (e.g., a core flowpath) extends longitudinally within the turbine engine 26 and its engine core 24 from an airflow inlet 64 into the engine flowpath 50 to a combustion products exhaust 66 from the engine flowpath 50. The engine flowpath 50 of FIG. 1, for example, extends sequentially longitudinally through the LPC section 40A, the HPC section 40B, the combustor section 41, the HPT section 42A and the LPT section 42B, from the flowpath inlet 64 to the flowpath exhaust 66. With this arrangement, the engine flowpath 50 extends sequentially longitudinally across the LPC rotor 44, the HPC rotor 45, a (e.g., annular) combustor 68 within the combustor section 41, the HPT rotor 46 and the LPT rotor 47 between the flowpath inlet 64 and the flowpath exhaust 66.

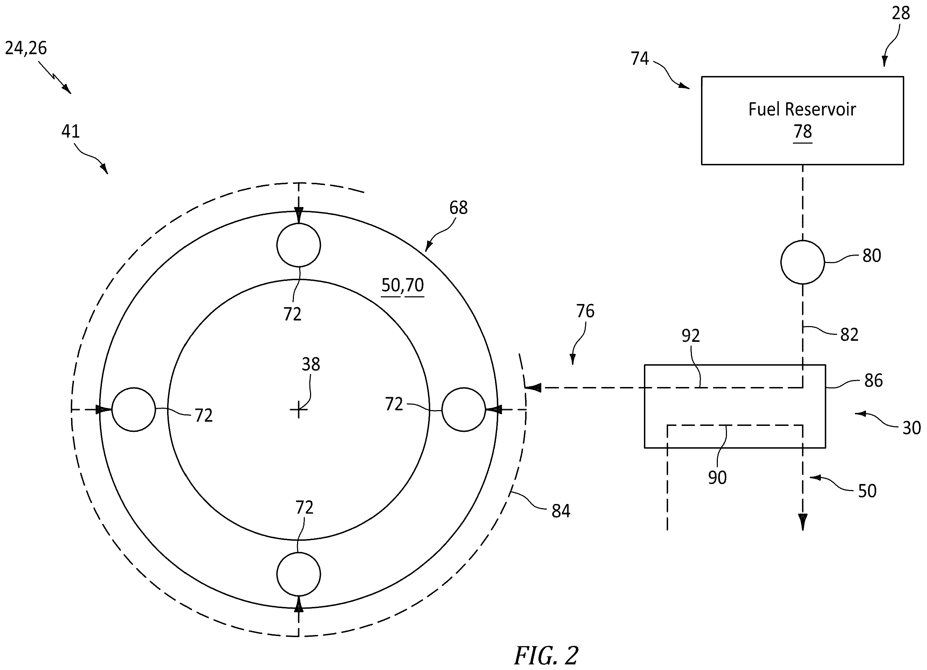

During operation of the turbine engine 26, ambient air may be directed across the propulsor rotor 34 (e.g., the fan rotor, the propeller rotor, etc.) and into the engine core 24 through the flowpath inlet 64. This air entering the engine flowpath 50 may be referred to as "core air". The core air is compressed by the LPC rotor 44 and the HPC rotor 45 and directed into a (e.g., annular) combustion chamber 70 within the combustor 68. Fuel is introduced into the engine flowpath 50 by one or more fuel injectors 72; see also FIG. 2. Each fuel injector 72 of FIG. 1, for example, injects the fuel into the combustion chamber 70. This fuel is mixed with the compressed core air to provide a fuel-air mixture. The fuel-air mixture is ignited and combustion products thereof flow through and sequentially drive rotation of the HPT rotor 46 and the LPT rotor 47. The rotation of the HPT rotor 46 drives rotation of the LPC rotor 44 and the HPC rotor 45 and, thus, the compression of the air received from the flowpath inlet 64. The rotation of the LPT rotor 47 drives rotation of the propulsor rotor 34 - the driven rotor 32. The rotation of the propulsor rotor 34 propels some of the air flow thereacross (e.g., the air not entering the engine core 24) outside of the engine core 24 to provide engine thrust. Of course, where the driven rotor 32 is alternatively configured as the generator rotor, the rotation of this generator rotor may facilitate generation of electricity.

Referring to FIG. 2, the fuel delivery system 28 is configured to introduce the fuel into the combustion chamber 70 using its one or more fuel injectors 72 for subsequent combustion as described above. The fuel delivery system 28 of FIG. 2 includes its one or more fuel injectors 72, a fuel source 74 and a fuel circuit 76.

For ease of description, the fuel delivery system 28 is described below with respect to storing and delivering a cryogenic fuel; e.g., liquid hydrogen with a boiling point of a -423°F / - 253°C or liquified natural gas with a boiling point of -160°F / -160°C. Utilizing such a cryogenic fuel, the fuel delivery system 28 may store the fuel within a fuel reservoir 78 of the fuel source 74 substantially or completely in a liquid fuel; e.g., the fuel may be stored substantially or completely in a liquid phase. By contrast, the fuel delivery system 28 may deliver the fuel to its one or more fuel injectors 72 substantially or completely in a gaseous fuel; e.g., the fuel is delivered substantially or completely in a gaseous phase. In addition, the fuel is described below as a non-hydrocarbon fuel such as hydrogen (H₂) fuel. The present disclosure, however, is not limited to such an exemplary fuel. The fuel, for example, may alternatively be another cryogenic fuel such as, but not limited to, methane (e.g., natural gas), propane or the like. Moreover, while the aircraft powerplant 20 of the present disclosure is particularly well suited to using a cryogenic fuel as set forth below in further detail, it is contemplated the fuel delivery system 28 may alternatively use a non-cryogenic fuel (e.g., kerosene, diesel, sustainable aviation fuel (SAF) or the like) in other embodiments where, for example, that non-cryogenic fuel may be stored at a relatively low temperature.

The fuel injectors 72 are arranged and may be equispaced circumferentially about the axis 38 in an array; e.g., an annular array. Each of these fuel injectors 72 is arranged with the combustor 68 so as to direct the fuel (e.g., hydrogen (H₂) gas) into the combustion chamber 70 for subsequent combustion.

The fuel source 74 of FIG. 2 includes the fuel reservoir 78 and a fuel flow regulator 80. The fuel reservoir 78 is configured to store a quantity of the fuel (e.g., at least substantially in its liquid phase as liquid hydrogen) before, during and/or after aircraft powerplant operation. The fuel reservoir 78, for example, may be configured as or otherwise include a tank, a cylinder, a pressure vessel, a bladder or any other type of (e.g., insulated) fuel storage container. The fuel flow regulator 80 is configured to direct a flow of the fuel (e.g., at least substantially in its liquid phase as liquid hydrogen) from the fuel reservoir 78 to an inlet into the fuel circuit 76. The fuel flow regulator 80, for example, may be configured as or otherwise include a fuel compressor, a fuel pump and/or a fuel valve (or valve system).

The fuel circuit 76 extends between and fluidly couples the fuel source 74 and the fuel injectors 72. The fuel circuit 76 is thereby configured to direct the fuel received from the fuel source 74 to the fuel injectors 72. The fuel circuit 76 of FIG. 2 includes a fuel delivery passage 82 and a fuel manifold 84. The fuel delivery passage 82 extends from the fuel source 74 and its fuel flow regulator 80 to an inlet into the fuel manifold 84. Each outlet of the fuel manifold 84 is fluidly coupled with and may lead to a respective one of the fuel injectors 72. As described below in further detail, as the fuel circuit 76 directs the fuel from the fuel source 74 to the fuel injectors 72, the fuel may change its phase from the liquid phase (e.g., liquid hydrogen (H₂)) to the gaseous phase (e.g., hydrogen (H₂) gas). Thus, while the fuel circuit 76 and its fuel delivery passage 82 may receive the fuel from the fuel source 74 in the liquid phase, the fuel circuit 76 and its fuel manifold 84 may deliver this fuel to the fuel injectors 72 in the gaseous phase.

Referring to FIG. 1, the heat exchange system 30 is configured to recuperate and repurpose heat energy generated during powerplant operation to improve overall powerplant efficiency. The heat exchange system 30 of FIG. 1, for example, includes multiple heat exchangers such as a fuel-air heat exchanger 86 and a recuperator 88.

The fuel-air heat exchanger 86 is configured to transfer heat energy between the core air flowing through the engine flowpath 50 and the fuel flowing through the fuel circuit 76 and its fuel delivery passage 82. A longitudinal section of the engine flowpath 50 between the HPC section 40B and the recuperator 88, for example, extends through the fuel-air heat exchanger 86. This flowpath section forms a first internal passage 90 through the fuel-air heat exchanger 86. Similarly, a longitudinal section of the fuel circuit 76 and its fuel delivery passage 82 extends through the fuel-air heat exchanger 86. This circuit section forms a second internal passage 92 through the fuel-air heat exchanger 86. The second internal passage 92 is thermally coupled with the first internal passage 90 through material and/or structure of the fuel-air heat exchanger 86. However, the second internal passage 92 is fluidly discrete from the first internal passage 90. While the first internal passage 90 and the second internal passage 92 are shown in FIG. 1 in a cross-flow arrangement, the fuel-air heat exchanger 86 of the present disclosure is not limited thereto. The first internal passage 90 and the second internal passage 92, for example, may alternatively be configured in a parallel-flow arrangement, a counter-flow arrangement or a hybrid arranged with one or more cross-flow sections and/or one or more parallel-flow sections and/or one or more counter-flow sections.

During typical powerplant operation, the fuel flowing into the fuel-air heat exchanger 86 may be in a cryogenic state. The fuel flowing into the fuel-air heat exchanger 86, for example, may be in a liquid phase and/or a gaseous phase at cryogenic temperatures (e.g., liquid hydrogen with a boiling point of a -423°F / -253°C or liquified natural gas with a boiling point of -160°F / - 160°). By contrast, the core air exiting the compressor section 40 and its HPC section 40B may be relatively warm. Heat energy may thereby transfer from the compressed core air flowing through the first internal passage 90 into the fuel flowing through the second internal passage 92. This transfer of the heat energy cools the compressed core air as well as heats the fuel. The fuel-air heat exchanger 86 may thereby operate as an intercooler for the compressed core air and a preheater for the fuel. The heating of the fuel may facilitate a phase change in the fuel from its liquid state to its gaseous state.

The recuperator 88 is configured to transfer heat energy between the combustion products flowing through the engine flowpath 50 and the cooled compressed core air flowing through the engine flowpath 50. An upstream longitudinal section of the engine flowpath 50 between the fuel-air heat exchanger 86 and the combustor section 41, for example, extends through the recuperator 88. This upstream flowpath section forms a first internal passage 94 through the recuperator 88. Similarly, a downstream longitudinal section of the engine flowpath 50 between the turbine section 42 and the flowpath exhaust 66 extends through the recuperator 88. This downstream circuit section forms a second internal passage 96 through the recuperator 88. The second internal passage 96 is thermally coupled with the first internal passage 94 through material and/or structure of the recuperator 88. However, the second internal passage 96 is fluidly discrete from the first internal passage 94. While the first internal passage 94 and the second internal passage 96 are shown in FIG. 1 in a counter-flow arrangement, the recuperator 88 of the present disclosure is not limited thereto. The first internal passage 94 and the second internal passage 96, for example, may alternatively be configured in a parallel-flow arrangement, a cross-flow arrangement or a hybrid arranged with one or more cross-flow sections and/or one or more parallel-flow sections and/or one or more counter-flow sections.

During typical powerplant operation, the combustion products flowing into the recuperator 88 are significantly warmer than the compressed core air provided by the compressor section 40 and its HPC section 40B. Heat energy may thereby transfer from the combustion products flowing through the second internal passage 96 into the compressed core air flowing through the first internal passage 94. This transfer of the heat energy is used to recuperate heat energy generated during powerplant operation that may otherwise be exhausted from the aircraft powerplant 20 as waste heat.

The heat exchange system 30 may facilitate provision of an efficient recuperation cycle. Here, an exhaust temperature (e.g., T7 temperature) of the combustion products exiting the flowpath exhaust 66 is reduced while increasing a compressor exit temperature (e.g., T3 temperature) of the compressed core air provided to the combustor section 41. Typically, a high pressure ratio (PR) engine has a relatively small temperature delta between the compressor exit temperature and the exhaust temperature, which reduces effectiveness of the recuperation cycle. However, by utilizing the precooling capability of the fuel-air heat exchanger 86, the temperature delta between the compressor exit temperature and the exhaust temperature may be increased thereby increasing the effectiveness of the recuperation cycle.

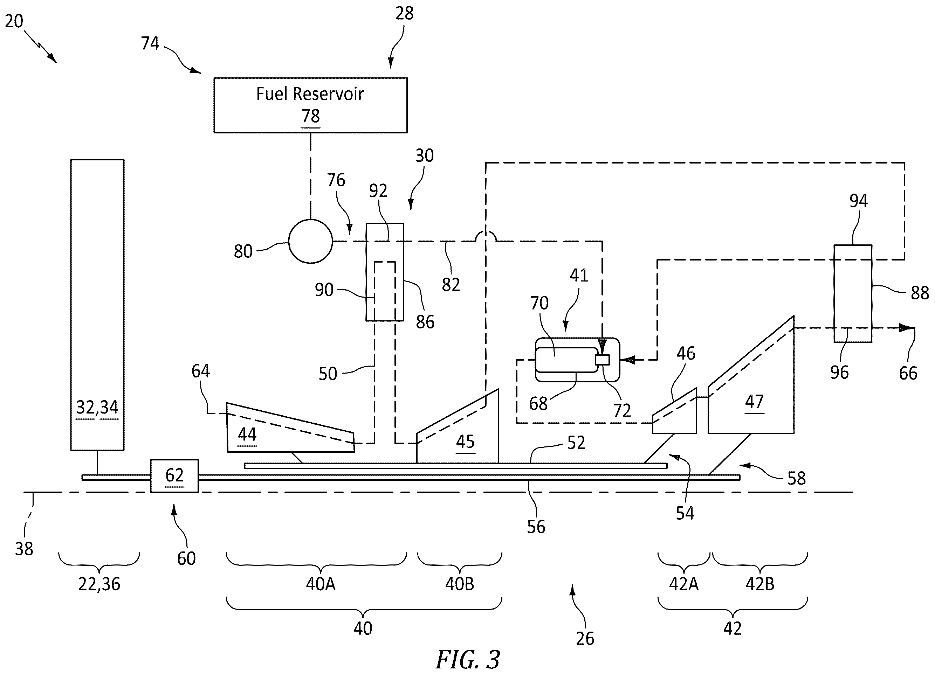

In some embodiments, referring to FIG. 1, the fuel-air heat exchanger 86 may be arranged along the engine flowpath 50 between the HPC section 40B (e.g., a downstream-most compressor section) and the combustor section 41. In other embodiments, referring to FIG. 3, the fuel-air heat exchanger 86 may be arranged along the engine flowpath 50 between the LPC section 40A and the HPC section 40B. The fuel-air heat exchanger 86 may thereby provide interstage cooling for the core air within the compressor section 40.

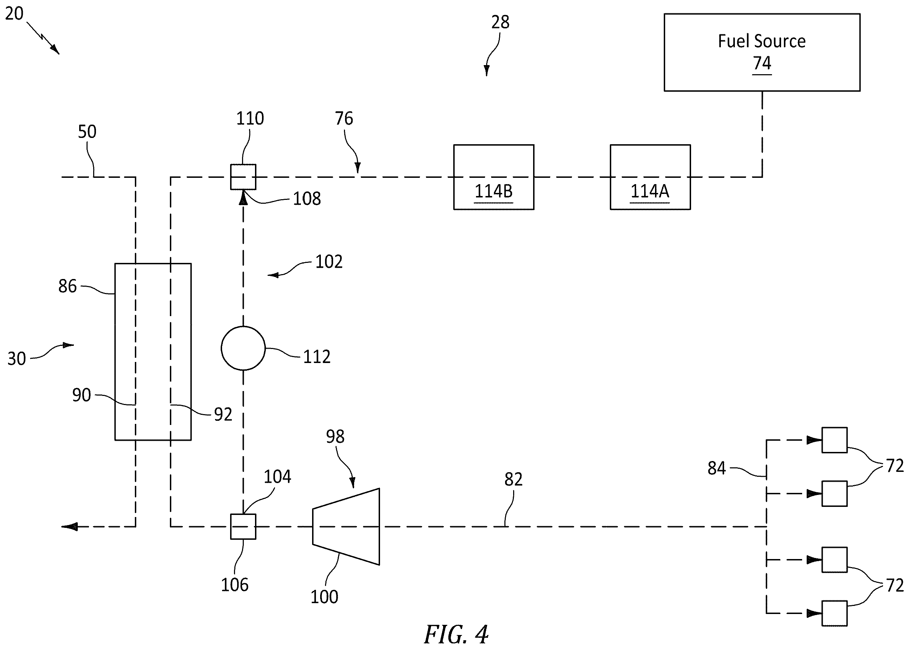

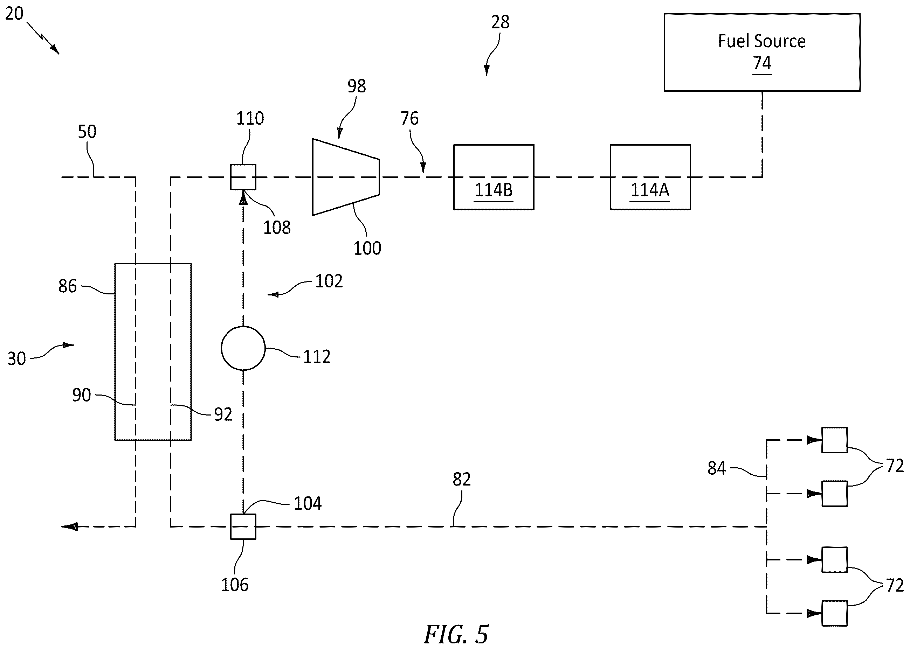

In some embodiments, referring to FIGS. 4 and 5, the fuel delivery system 28 may include a fuel turbine 98 arranged inline with the fuel circuit 76. With this arrangement, the fuel delivery system 28 is configured to expand the fuel flowing through the fuel circuit 76 across the fuel turbine 98 in order to extract additional work from the fuel before being delivered to the fuel injectors 72. More particularly, as the fuel is expanded across the fuel turbine 98, the fuel may drive rotation of a fuel turbine rotor 100 within the fuel turbine 98. This fuel turbine rotor 100 may be operatively coupled to a mechanical load to power operation of (or boost power to) that mechanical load. The mechanical load may be the same mechanical load 22 as that driven by the low speed rotating assembly 58 (see FIGS. 1 and 3), or alternatively a different mechanical load. Referring to FIG. 4, the fuel turbine 98 may be arranged along the fuel circuit 76 downstream of the fuel-air heat exchanger 86; e.g., between the fuel-air heat exchanger 86 and the fuel injectors 72. Alternatively, referring to FIG. 5, the fuel turbine 98 may be arranged along the fuel circuit 76 upstream of the fuel-air heat exchanger 86; e.g., between the fuel-air heat exchanger 86 and the fuel source 74.

In some embodiments, referring to FIGS. 4 and 5, the fuel delivery system 28 may include a recirculation circuit 102. An inlet 104 into the recirculation circuit 102 is fluidly coupled to the fuel circuit 76 downstream of the fuel-air heat exchanger 86 along the fuel circuit 76 through, for example, an inlet valve 106. An outlet 108 from the recirculation circuit 102 is fluidly coupled to the fuel circuit 76 upstream of the fuel-air heat exchanger 86 along the fuel circuit 76 through, for example, an outlet valve 110. The recirculation circuit 102 may also include a flow regulator 112 (e.g., a compressor, a pump, etc.) to direct fuel bled from the fuel circuit 76 downstream of the fuel-air heat exchanger 86 through the inlet valve 106 to be reintroduced into the fuel circuit 76 upstream of the fuel-air heat exchanger 86 through the outlet valve 110. With this arrangement, the recirculation circuit 102 may moderate and/or increase a temperature of the fuel directed through the fuel-air heat exchanger 86.

In some embodiments, referring to FIGS. 4 and 5, the fuel circuit 76 may extend through one or more additional heat exchangers 114A and 114B (generally referred to as "114"). These additional heat exchangers 114 may be arranged upstream of the fuel-air heat exchanger 86 along the fuel circuit 76. Examples of these additional heat exchangers 114 include, but are not limited to, a cooler for a lubrication system of the turbine engine, a cooler for an environmental control system (ECS) for the aircraft, a condenser for a cryogenic bottoming cycle, or the like.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A powerplant (20) for an aircraft, comprising:
a compressor section (40A; 40B);
a fuel-air heat exchanger (86);
a recuperator (88);
a combustor section (41) comprising a combustor (68);
a turbine section (42A; 42B);
a flowpath (50) extending from an airflow inlet (64) into the flowpath (50), through the compressor section (40A; 40B), the fuel-air heat exchanger (86), the recuperator (88), the combustor section (41) and the turbine section (42A; 42B), to a combustion products exhaust (66) from the flowpath (50); and
a fuel delivery system (28) including a fuel source (74), a fuel circuit (76) and a fuel injector (72), the fuel circuit (76) fluidly coupling the fuel source (74) to the fuel injector (72) and extending through the fuel-air heat exchanger (86), and the fuel injector (72) configured to introduce fuel into the flowpath (50) for combustion within the combustor (68).

2. The powerplant (20) of claim 1, wherein the compressor section (40B) is a downstream-most compressor section along the flowpath (50).

3. The powerplant (20) of claim 1, wherein:
the compressor section (40A) is a first compressor section, and the powerplant (20) further comprises a second compressor section (40B); and
the flowpath (50) extends through the second compressor section (40B) downstream of the fuel-air heat exchanger (86).

4. The powerplant (20) of claim 1, 2 or 3, wherein the fuel injector (72) is configured to inject the fuel into a combustion chamber (70) within the combustor (68).

5. The powerplant (20) of any preceding claim, wherein:
the fuel circuit (76) is configured to direct the fuel from the fuel source (74) to the fuel injector (72); and
the fuel delivery system (28) is configured such that at least some of the fuel within the fuel circuit (76) entering the fuel-air heat exchanger (86) is in a liquid phase at a cryogenic state.

6. The powerplant (20) of any preceding claim, wherein:
the fuel circuit (76) is configured to direct the fuel from the fuel source (74) to the fuel injector (72); and
the fuel delivery system (28) is configured such that at least some of the fuel within the fuel circuit (76) entering the fuel-air heat exchanger (86) is in a gaseous phase at a cryogenic state.

7. The powerplant (20) of any preceding claim, wherein the fuel source (74) is configured to contain a quantity of the fuel in a liquid phase.

8. The powerplant (20) of any preceding claim, wherein:
the fuel is hydrogen fuel; or
the fuel is a non-hydrocarbon fuel.

9. The powerplant (20) of any preceding claim, wherein:
the fuel delivery system (28) further includes a fuel turbine (98); and
the fuel delivery system (28) is configured to expand the fuel across the fuel turbine (98) along the fuel circuit (76) between the fuel-air heat exchanger (86) and the fuel injector (72).

10. The powerplant (20) of claims 1 to 8, wherein:
the fuel delivery system (28) further includes a fuel turbine (98); and
the fuel delivery system (28) is configured to expand the fuel across the fuel turbine (98) along the fuel circuit (76) between the fuel source (74) and the fuel-air heat exchanger (86).

11. The powerplant (20) of any preceding claim, wherein:
the fuel delivery system (28) further includes a recirculation circuit (102);
an inlet (104) into the recirculation circuit (102) is fluidly coupled to the fuel circuit (76) downstream of the fuel-air heat exchanger (86) along the fuel circuit (76); and
an outlet (108) from the recirculation circuit (102) is fluidly coupled to the fuel circuit (76) upstream of the fuel-air heat exchanger (86) along the fuel circuit (76).

12. The powerplant (20) of any preceding claim, further comprising:
a second heat exchanger;
the flowpath (50) extending through the second heat exchanger upstream of the fuel-air heat exchanger (86).

13. The powerplant (20) of any preceding claim, further comprising:
a propulsor rotor (34) rotatably driven by a turbine rotor (47) in the turbine section (42B); or
a generator rotor rotatably driven by a turbine rotor (47) in the turbine section (42B).

14. A powerplant (20) for an aircraft, comprising:
a rotating assembly (58) including a compressor rotor (44) and a turbine rotor (47);
a combustor (68);
a fuel-air heat exchanger (86);
a recuperator (88);
a flowpath (50) extending longitudinally from an airflow inlet (64) into the flowpath (50), sequentially across the compressor rotor (44), through the fuel-air heat exchanger (86), through the recuperator (88), through the combustor (68) and across the turbine rotor (47), to combustion products exhaust (66) from the flowpath (50); and
a fuel delivery system (28) including a fuel source (74), a fuel circuit (76) and a fuel injector (72), the fuel circuit (76) configured to deliver fuel received from the fuel source (74) to the fuel injector (72), the fuel circuit (76) extending through the fuel-air heat exchanger (86) between the fuel source (74) and the fuel injector (72), and the fuel injector (72) configured to inject the fuel into the combustor (68),
wherein, optionally:
the powerplant (20) further comprises a second compressor rotor (45), the flowpath (50) extending across the second compressor rotor (45) downstream of the fuel-air heat exchanger (86); and/or
the fuel source (74) comprises a hydrogen reservoir, and the fuel comprises hydrogen (H₂) fuel.

15. A powerplant (20) for an aircraft, comprising:
a fuel-air heat exchanger (86);
a compressor section (40A);
a recuperator (88);
a combustor section (41) comprising a combustor (68);
a turbine section (42);
a flowpath (50) extending from an airflow inlet (64) into the flowpath (50), through the fuel-air heat exchanger (86), the compressor section (40A), the recuperator (88), the combustor section (41) and the turbine section (42), to a combustion products exhaust (66) from the flowpath (50); and
a fuel delivery system (28) including a fuel source (74), a fuel circuit (76) and a fuel injector (72), the fuel circuit (76) configured to direct fuel received from the fuel source (74), across the fuel-air heat exchanger (86), to the fuel injector (72), and the fuel injector (72) configured to inject the fuel into the combustor section (41) for combustion within the combustor (68),
wherein, optionally, the powerplant (20) further comprises:
a second compressor section (40B);
the flowpath (50) extending through the second compressor section (40B) upstream of the fuel-air heat exchanger (86).
